# EUROPÄISCHE PATENTSCHRIFT

(11) **EP 1 235 620 B1**
(45) Veröffentlichungstag und Bekanntmachung des Hinweises auf die Patenterteilung: **31.08.2005**
(21) Anmeldenummer: 00990684.3
(22) Anmeldetag: 08.12.2000
(51) Int. Cl.: A63C 17/26

(54) **ROLLVORRICHTUNG**
SKATING DEVICE
DISPOSITIF DE ROULEMENT

(30) Priorität: 09.12.1999 DE 29921644 U; 17.05.2000 DE 20008885 U
(43) Veröffentlichungstag der Anmeldung: 04.09.2002
(73) Patentinhaber: Buckenmaier, Heinz, 81479 München (DE); Holzhofer, Bernhard, 82041 Deisenhofen (DE)
(72) Erfinder: HOLZHOFER, Bernhard, 82041 Deisenhofen (DE)
(74) Vertreter: Manitz, Finsterwald & Partner GbR
(86) Internationale Anmeldenummer: PCT/EP2000/012423
(87) Internationale Veröffentlichungsnummer: WO 2001/041885

(56) Entgegenhaltungen:
- DE-A- 19 637 585
- DE-U- 29 714 700
- DE-U- 29 909 097

## Beschreibung

Die Erfindung betrifft eine Rollvorrichtung nach dem Oberbegriff des Anspruchs 1. Danach ist die Erfindung insbesondere für Inline-Skater gedacht; sie ist jedoch auch bei anderen Rollvorrichtungen, z.B. Rollern anwendbar, wo eine der Laufrollen, insbesondere eine am hinteren Ende des Grundkörpers vorgesehene Laufrolle für die erfindungsgemäßen Zwecke zugänglich ist.

Es ist bereits bekannt, die Laufrollen von Inline-Skatern mit beispielsweise magnetischen Sensoren zu versehen, welche über eine am Grundkörper vorgesehene Elektronik ein Wegstrecken- oder Drehzahlsignal in Abhängigkeit von der Drehzahl der Laufrollen erzeugen. Weiter ist es schon bekannt (US-A-4454411), eine an einem Rollschuh angebrachte Messrolle in Verbindung mit einer Laufrolle des Rollschuhs zu bringen, um auf diese Weise einen am Rollschuh selbst angebrachten Wegstreckenzähler zu beaufschlagen. Nachteilig an dieser bekannten Anordnung ist zum einen, dass wegen Beaufschlagung der Messrolle nur durch eine von zwei nebeneinander liegenden Rollen eines Rollschuh eine verlässliche Wegstreckenmessung nicht gewährleistet ist; zum anderen liegt die Messrolle ebenso wie der Wegstreckenzähler nach außen völlig frei, so dass schon nach kurzer Gebrauchsdauer mit Verschmutzung oder Beschädigung zu rechnen ist.

Eine gattungsgemäße Rollvorrichtung ist aus der DE 196 37 585 A1 bekannt. An einer der Laufrollen ist ein Permanentmagnet befestigt, der mit einem am Grundkörper befestigten Sensor zusammenarbeitet, welcher die gemessenen Daten zu einer an der Hand des Benutzers anbringbaren Ableseeinheit sendet.

Das Ziel der Erfindung besteht darin, eine Rollvorrichtung der eingangs genannten Gattung zu schaffen, bei der die Probleme einer Beschädigung oder Verschmutzung der Messmittel zumindest weitgehend behoben sind.

Zur Lösung dieser Aufgabe sind die Merkmale des kennzeichnenden Teils des Anspruches 1 vorgesehen.

Der Erfindungsgedanke ist also darin zu sehen, dass die Messrolle sowie die mit ihr zusammenarbeitenden Messelemente weitgehend geschützt in einem am Grundkörper befestigten Gehäuse untergebracht sind, aus denen nur das zum Antrieb unbedingt erforderliche kleine Stück der Messrolle herausragt. Dadurch, dass ein im Gehäuse angeordneter Sender die Messsignale zu einem vorzugsweise an der Hand des Läufers angeordneten Empfänger überträgt, kann auch auf einfache Weise sogar während der Fahrt eine Instrumentenablesung erfolgen.

Vorteilhafte Weiterbildungen der Erfindung sind durch die Unteransprüche gekennzeichnet.

Die Erfindung wird im folgenden beispielsweise anhand der Zeichnung beschrieben; in dieser zeigt:
- Figur 1: eine rein schematische perspektivische und teilweise aufgebrochene Ansicht eines erfindungsgemäßen Inline-Skaters, wobei von vier Laufrollen lediglich die letzte dargestellt und das hinten befestigte Gehäuse offen gezeigt ist,
- Figur 1a: eine ähnliche perspektivische Ansicht im geschlossenen Zustand des Gehäuses,
- Figur 2: eine schematische Draufsicht des Gegenstandes von Figur 1,
- Figur 3: eine schematische perspektivische vergrößerte Ansicht des hinteren Teils eines erfindungsgemäßen Inline-Skaters,
- Figur 3a: eine schematische perspektivische Ansicht schräg von hinten,
- Figur 3b: eine perspektivische Ansicht des hinteren Teils schräg von unten,
- Figur 4: einen schematischen Schnitt durch das die Meßrolle enthaltende Gehäuse des erfindungsgemäßen Inline-Skaters senkrecht zur Drehachse,
- Figur 5: eine perspektivische Ansicht des Gegenstandes der Figur 4 in vergrößertem Maßstab und bei geöffnetem Gehäuse und
- Figur 6: eine schematische Teil-Perspektivansicht des erfindungsgemäßen Inline-Skaters mit Hand-Protektor.

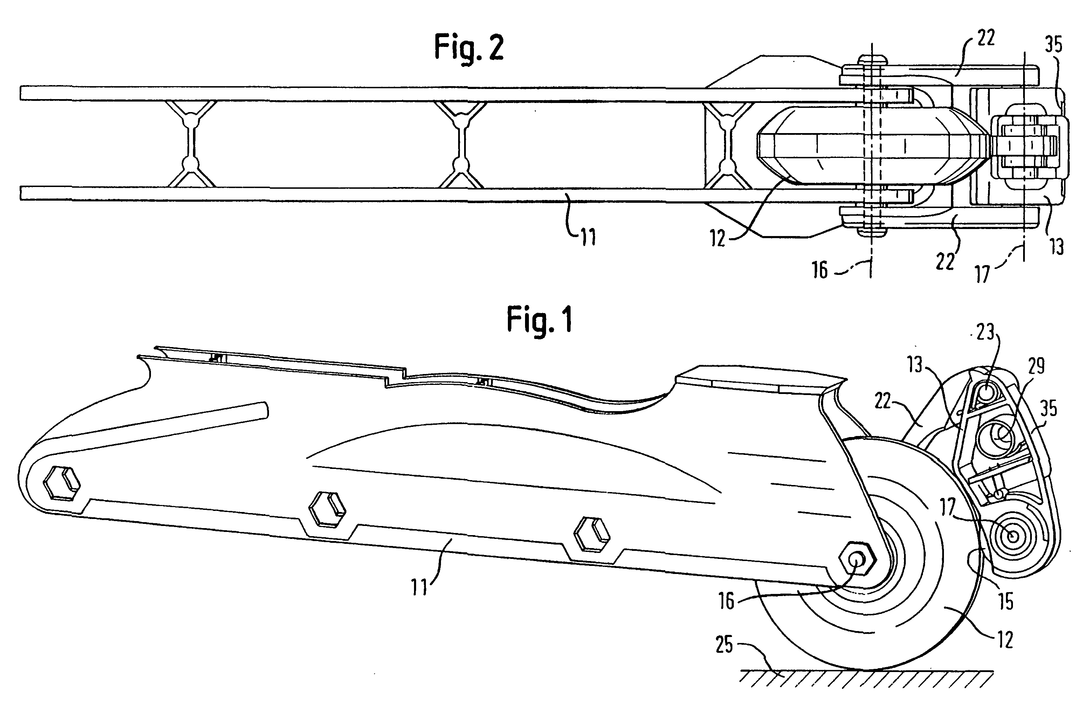

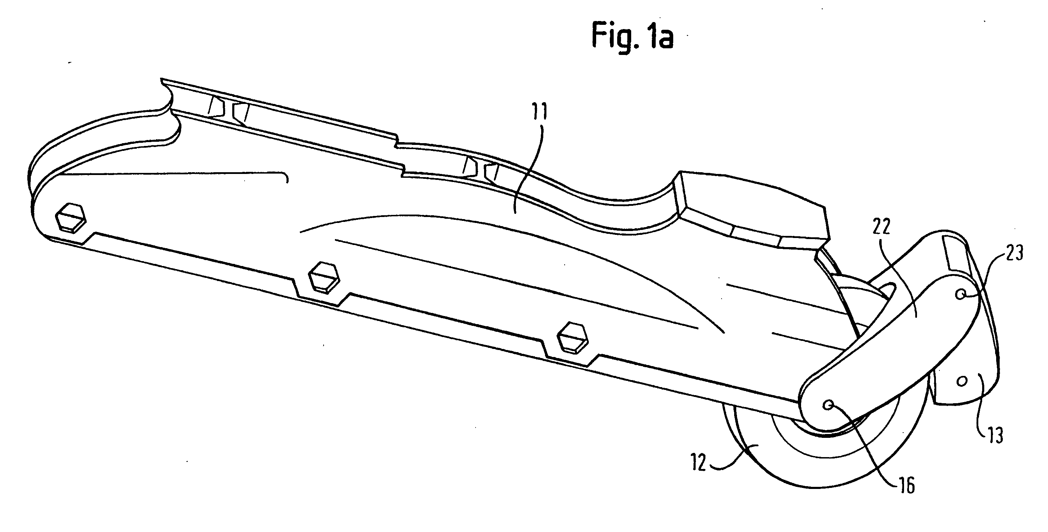

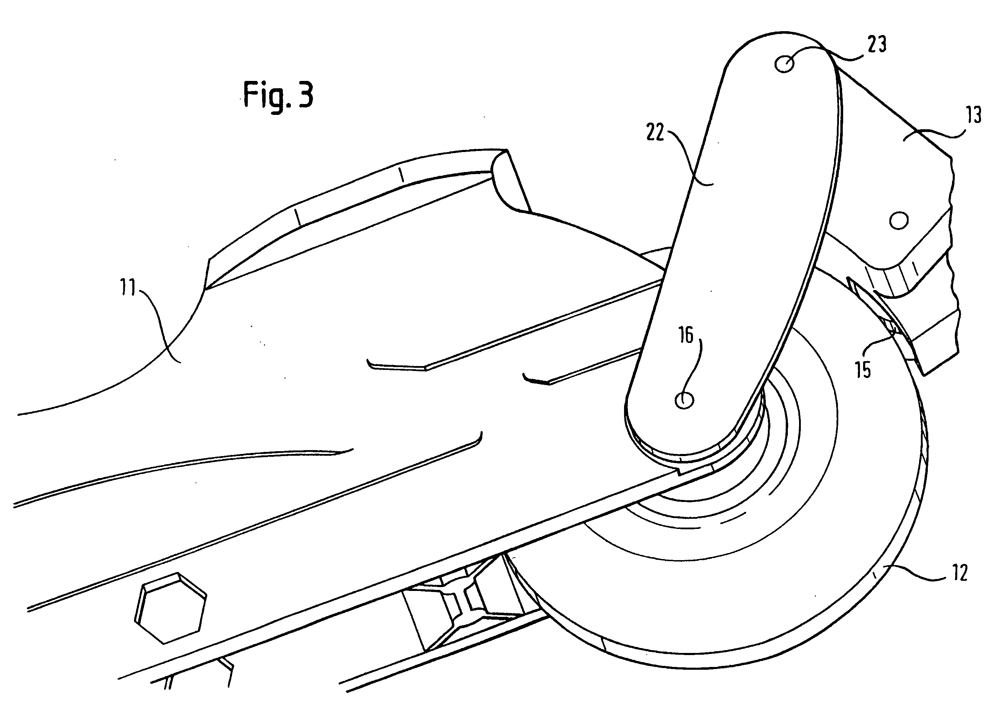

Nach Figur 1, 1a und 2 sind an einem Grundkörper 11 Laufrollen 12 mit quer verlaufender Laufrollenachse 16 hintereinander angeordnet, von denen lediglich die letzte im einzelnen gezeigt ist, die anderen dagegen fortgelassen sind.

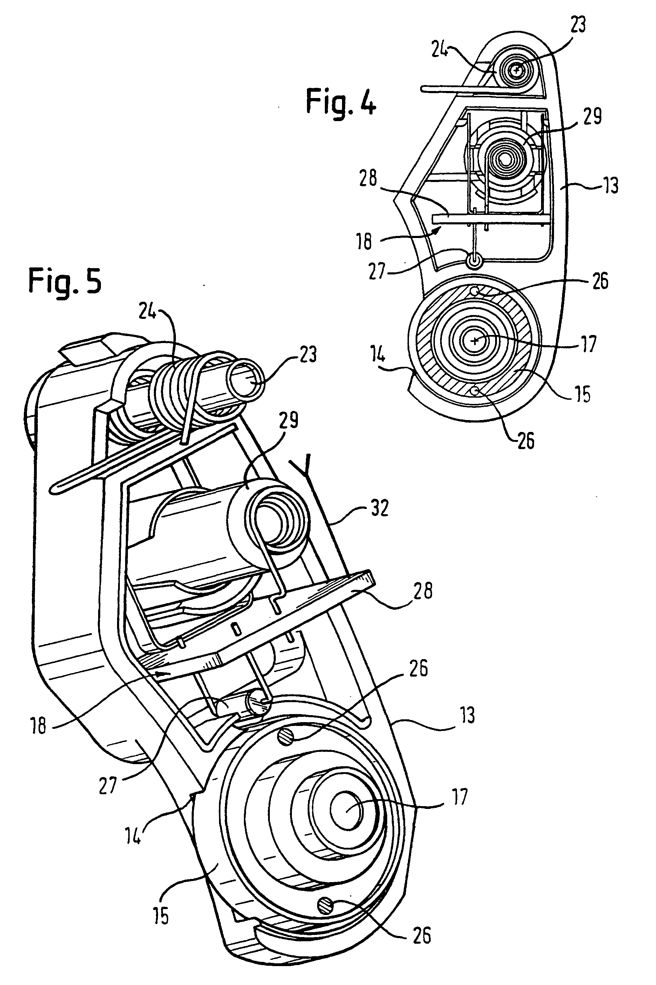

Nach den Figuren 1 bis 3b erstrecken sich von der Drehachse 16 der hinteren Laufrolle 12 schräg nach hinten und oben parallel zueinander Tragarme 22, an denen oben ein Gehäuse 13 um eine Querachse 23 schwenkbar angebracht ist, dessen Aufbau im einzelnen in den Figuren 4, 5 wiedergegeben ist.

Das Gehäuse 13 weist danach einen kompakten, länglichen Aufbau auf und ist im unteren Bereich an die Rundung des Außenumfangs der zugeordneten Laufrolle 12 angepaßt. In diesem Bereich befindet sich im Gehäuse 13 eine schlitzartige Öffnung 14, durch die hindurch sich ein kleines Stück des Umfanges einer Meßrolle 15 erstreckt, die im unteren Bereich des Gehäuses um eine Drehachse 17 drehbar gelagert ist. Die Drehachse 17 und die Schwenkachse 23 verlaufen parallel zur Laufrollenachse 16.

Nach den Figuren 4 und 5 ist in dem Gehäuse 13 ein Sender 18 untergebracht, der eine Elektronik 28 aufweist, die von einem Sensor 27 beaufschlagt ist, der am Umfang der Meßrolle 15 gehäusefest angebracht ist und beispielsweise mit zwei Magnetelementen 26 zusammenarbeitet, die am Umfang der Meßrolle 15 vorgesehen sind. Bei jedem Vorbeilaufen eines Magnetelementes 26 am Sensor 27 wird auf die Elektronik 28 ein Meßimpuls übertragen. Die zeitlichen Abstände dieser Meßimpulse sind repräsentativ für die Drehzahl der Meßrolle 15 und damit auch für die Drehzahl der Laufrolle 12, an der die Meßrolle 15 anliegt, indem durch eine Federanordnung 24 das Gehäuse 13 um die Schwenkachse 23 gegen die Laufrolle 12 vorgespannt ist. Bei auf dem Erdboden 25 (Figur 1) ruhenden Laufrollen 12 befindet sich die Drehachse 17 der Meßrolle 15 in einer etwas höheren Position als die Laufrollenachse 16.

Die Elektronik 28 wird von einer im Gehäuse 18 angeordneten Batterie 29 gespeist. Mit der Elektronik 28 in Verbindung steht eine nur schematisch angedeutete Antenne 32, die in die Umgebung des Gehäuses 13 bis zu einem Abstand von etwa 2 m Meßsignale aussendet, die für die Drehgeschwindigkeit der Meßrolle 15 repräsentativ sind.

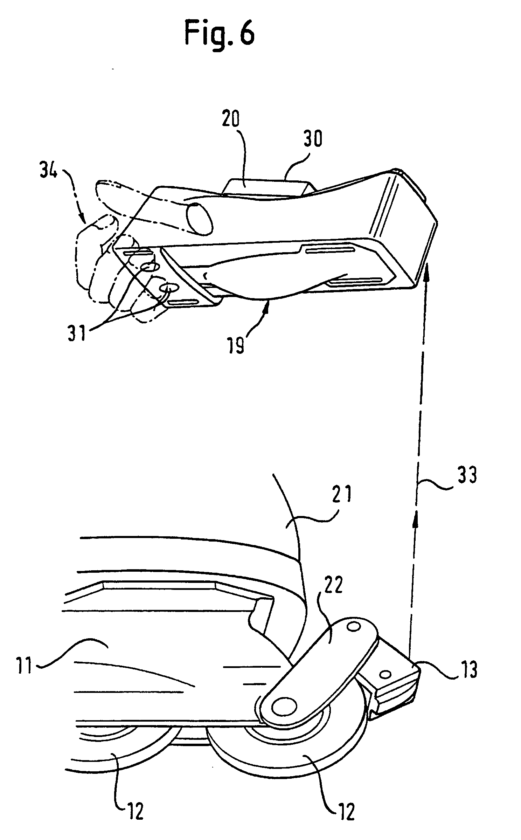

Nach Figur 6, wo auch der am Grundkörper 11 befestigte Stiefel 21 gezeigt ist, werden die von der Antenne 32 ausgesandten Signale über einen gestrichelt angeordneten Funkweg 33 zu der in einen Hand-Protektor 19 integrierten Empfangsantenne eines Empfängers 20 gesendet, der sich auf der Rückseite des Hand-Protektors 19 befindet. Ein solcher Hand-Protektor 19 wird normalerweise an den Händen 34 vom Läufer getragen. Auf der Oberseite des Empfängers 20 befindet sich eine nicht im einzelnen dargestellte Anzeigevorrichtung 30, auf der optisch oder akustisch die gemessenen und errechneten Parameter zur Anzeige gebracht werden.

Auf der der Handinnenseite entsprechenden Unterseite des Hand-Protektors 19 sind Sensortasten 31 vorgesehen, mittels deren die gewünschten Funktionen des Empfängers 20 angewählt werden können.

Die Rollen von Inline-Skatern besitzen im allgemeinen einen Durchmesser zwischen 40 und 100 mm. Die Meßrolle 15 gemäß der Erfindung soll einen Durchmesser aufweisen, der etwa zwischen der Hälfte und einem Viertel, vorzugsweise bei ein Drittel des Laufrollendurchmessers liegt.

Die Meßrolle 15 soll so drehgelagert sein, daß ihr Rollwiderstand minimal ist, um ein Abbremsen der Laufrolle 12 durch die Meßrolle 15 zu vermeiden.

Die empfangenen Daten werden am Empfänger auf einem LCD-Display mit einer Fläche von 120 bis 150 mm² dargestellt.

Die Daten entsprechen der Geschwindigkeit der Hauptrolle 12 sowie der zurückgelegten Wegstrecke. Wahlweise können auf dem LCD-Display 30 auch Uhrzeit, Geschwindigkeit, Laufzeit, Tagesstrecke, Gesamtlaufstrecke, maximale Geschwindigkeit sowie Herz-/Puls-Frequenz des Läufers zur Anzeige gebracht werden. Die Auswahl der verschiedenen Funktionen erfolgt mittels der Tasten 31.

Der Sender soll die Maße von 15 mm Höhe, 25 mm Breite und 40 mm Tiefe nicht überschreiten. Für den Empfänger gelten als Grenzmaße 53 mm Höhe, 40 mm Breite und 31 mm Tiefe.

Das Gehäuse 13 mit der Meßrolle 15 soll mit einer Toleranz von jeweils 3 mm anbringbar sein.

Nach den Figuren 1, 2 und 3a können an der Rückwand des Gehäuses 13 Solarzellen 35 angebracht sein, die in elektrischen Kontakt mit der vorzugsweise als Silicium-Batterie ausgebildeten Batterie 29 stehen und diese entsprechend der empfangenen Lichtstrahlung aufladen. Für die Unterbringung der Solarzellen steht eine Breite von 2,2 cm und eine Höhe von 3 cm zur Verfügung, was für die Aufladung der relativ geringen Kapazität der Silicium-Batterie 29 ausreicht.

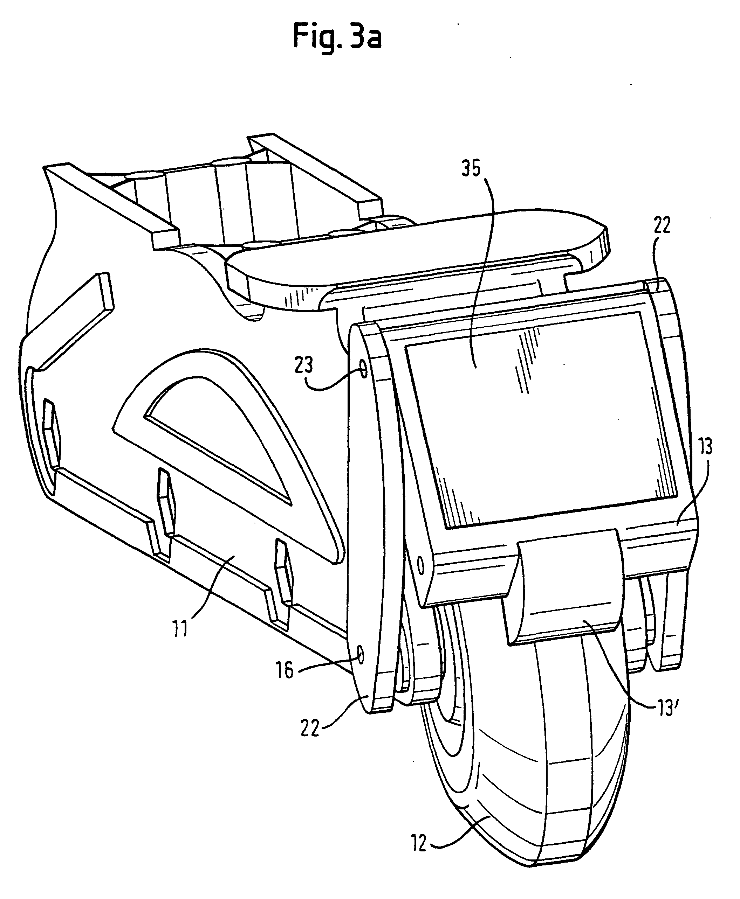

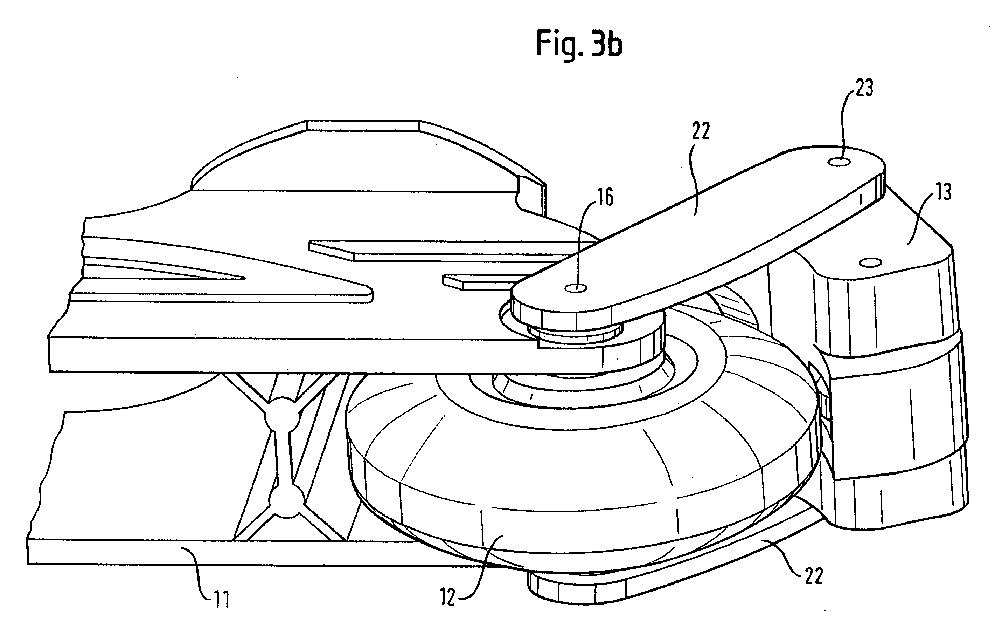

Erfindungsgemäß ist das Gehäuse 13 in Rückansicht im wesentlichen rechteckig und weist unten einen Ansatz 13' (Figur 3a) zur teilweisen Unterbringung der Meßrolle 15 auf.

### Bezugszeichenliste

- 11: Grundkörper
- 12: Laufrolle
- 13: Gehäuse
- 13': Ansatz
- 14: Öffnung
- 15: Meßrolle
- 16: Laufrollenachse
- 17: Drehachse
- 18: Sender
- 19: Hand-Protektor
- 20: Empfänger
- 21: Stiefel
- 22: Tragarm
- 23: Befestigungsachse
- 24: Federanordnung
- 25: Erdboden
- 26: Magnetelement
- 27: Sensor
- 28: Elektronik
- 29: Batterie
- 30: Anzeigevorrichtung
- 31: Taste
- 32: Antenne
- 33: Funkweg
- 34: Hand
- 35: Solarzelle

## Patentansprüche

1. Rollvorrichtung mit einem einen Fuß, Stiefel oder Schuh (21) eines Läufers abstützenden Grundkörper (11), an dem mehrere auf dem Boden aufliegende Laufrollen (12) vorgesehen sind, und mit Mitteln (15, 20, 27, 28) zur Messung und Anzeige wenigstens eines von der Drehbewegung, insbesondere Drehzahl wenigstens einer Laufrolle(12) abhängigen Parameters, insbesondere Inline-Skater mit einem mit einem Stiefel (21) verbundenen oder verbindbaren Grundkörper-(11) und mehreren in einer Linie hintereinander angeordneten Laufrollen (12), wobei Mittel (26, 27) zur Feststellung der Drehbewegung, insbesondere der Drehgeschwindigkeit einer Rolle (15) und ein Sender (18) vorgesehen sind, der ein für die Drehbewegung, insbesondere die Drehgeschwindigkeit oder den Drehweg repräsentatives Signal aussendet, und wobei im Abstand vom Gehäuse (13), vorzugsweise an der Hand, insbesondere am für den Schutz der Hand des Läufers vorgesehenen Hand-Protektor (19) ein mit einer Rechenschaltung ausgestatteter Empfänger (20) für die vom Sender (18) ausgesandten Signale vorgesehen ist, der die empfangenen Signale in eine optische und/oder akustische Anzeige für den bzw. die Parameter der Drehbewegung, insbesondere die Geschwindigkeit oder den zurückgelegten Weg umsetzt,
**dadurch gekennzeichnet,**
**daß** am Grundkörper (11) nahe einer der Laufrollen (12), vorzugsweise nahe der letzten Laufrolle (12) ein Gehäuse (13) federnd gegen den Umfang der betreffenden Laufrolle (12) gedrückt bzw. drückbar angeordnet ist, daß innerhalb des Gehäuses (13) eine durch eine der Laufrolle (12) zugewandte Öffnung (14) im Gehäuse (13) geringfügig in Richtung der betreffenden Laufrolle (12) vorstehende Meßrolle (15) mit parallel zur Laufrollenachse (16) verlaufender Drehachse (17) drehbar angeordnet ist, welche über das Gehäuse (13) federnd an den Umfang der Laufrolle (12) gedrückt bzw. drückbar ist, wobei die Rolle, deren Drehbewegung durch die Mittel (26, 27) festgestellt wird, die Meßrolle (15) ist und die Mittel (26, 27) zur Feststellung der Drehbewegung der Meßrolle (15) im Gehäuse (13) vorgesehen sind.

2. Rollvorrichtung nach Anspruch 1,
**dadurch gekennzeichnet,**
**daß** im Bereich der Laufrollenachse (16) der hintersten Laufrolle (12) seitlich ein und bevorzugt zwei schräg nach hinten und oben vorstehende Tragarme (22) vorgesehen sind, die sich bis über den Außenumfang der betreffenden Laufrolle (12) erstrecken und daß an dem von der Laufrollenachse (16) abgewandten Endbereich der Tragarme (22) das Gehäuse (13) mit der Meßrolle (15) befestigt ist.

3. Rollvorrichtung nach Anspruch 2,
**dadurch gekennzeichnet,**
**daß** das Gehäuse (13) sich von der Befestigungsstelle (23) an den Tragarmen (22) schräg nach unten und hinten im wesentlichen hinter die betreffende Laufrolle (12) erstreckt.

4. Rollvorrichtung nach Anspruch 2 oder 3,
**dadurch gekennzeichnet,**
**daß** das Gehäuse (13) im oberen Endbereich der Tragarme (22) um eine Achse (23) schwenkbar befestigt und durch eine an den Tragarmen (22) abgestützte Federanordnung (24) mit der Meßrolle (15) gegen den Umfang der Laufrolle (12) gedrückt ist.

5. Rollvorrichtung nach einem der vorhergehenden Ansprüche,
**dadurch gekennzeichnet,**
**daß** die Drehachse (17) der Meßrolle (15) relativ zum Erdboden (25) etwas höher als die Laufrollenachse (1611) liegt.

6. Rollvorrichtung nach einem der vorhergehenden Ansprüche,
**dadurch gekennzeichnet,**
**daß** die Meßrolle (15) auf bzw. nahe ihrem Umfang Magnetelemente (26) aufweist,
die mit einem gehäusefesten Sensor (27) zusammenwirken, der der Umdrehungsgeschwindigkeit der Meßrolle (15) entsprechende Impulssignale erzeugt.

7. Rollvorrichtung nach einem der vorhergehenden Ansprüche,
**dadurch gekennzeichnet,**
**daß** im Gehäuse eine Elektronik (28) angeordnet ist, die an den Sensor (27) angeschlossen ist und von einer im Gehäuse untergebrachten Batterie (29) gespeist wird.

8. Rollvorrichtung nach Anspruch 7,
**dadurch gekennzeichnet,**
**daß** in die Elektronik (28) der Sender (18) integriert ist.

9. Rollvorrichtung nach einem der vorhergehenden Ansprüche,
**dadurch gekennzeichnet,**
**daß** am Hand-Protektor (19), und zwar vorzugsweise auf der am Handrücken anliegenden Seite der Empfänger (20) anbringbar ist, welcher die vom Sender (18) ausgestrahlten Drehbewegungs-Signale empfängt.

10. Rollvorrichtung nach einem der vorhergehenden Ansprüche,
**dadurch gekennzeichnet,**
**daß** sich auf der Oberseite des Empfängers (20) ein Display (30) für die Anzeige der gemessenen Parameter befindet.

11. Rollvorrichtung nach einem der vorhergehenden Ansprüche,
**dadurch gekennzeichnet,**
**daß** sich am Empfänger (30) ein Mini-Lautsprecher befindet, der die gemessenen Parameter akustisch ausgibt.

12. Rollvorrichtung nach einem der vorhergehenden Ansprüche,
**dadurch gekennzeichnet,**
**daß** am Hand-Protektor (18), und zwar vorzugsweise an der der Innenhandfläche entsprechenden Seite Sensortasten (31) vorsehbar sind, mittels denen die verschiedenen Funktionen des Empfängers (20) ausgelöst werden können.

13. Rollvorrichtung nach einem der vorhergehenden Ansprüche,
**dadurch gekennzeichnet,**
**daß** der Empfänger (2) eine oder mehrere der Größen Uhrzeit, Geschwindigkeit, Laufzeit, die Tagestrecke, die Gesamtlaufstrecke und die maximale Geschwindigkeit errechnet.

14. Rollvorrichtung nach einem der vorhergehenden Ansprüche,
**dadurch gekennzeichnet,**
**daß** zur Erfassung der Herz-/Puls-Frequenz des Läufers entsprechende Sensoren an seinem Körper anbringbar sind und daß der Empfänger (20) aus den vom Sensor enthaltenen Signalen die Herz-/Puls-Frequenz des Läufers errechnet.

15. Rollvorrichtung nach einem der vorhergehenden Ansprüche,
**dadurch gekennzeichnet,**
**daß** in der Elektronik (28) bzw. im Empfänger (20) Mittelwerte der gemessenen Parameter dergestalt ermittelt und schließlich zur Anzeige gebracht werden, daß die durch die Laufbewegungen des Läufers hervorgerufenen Ungleichförmigkeiten der Drehzahlen der Laufrollen ausgemittelt werden.

16. Rollvorrichtung nach einem der vorhergehenden Ansprüche,
**dadurch gekennzeichnet,**
**daß** in der Elektronik (28) bzw. dem Empfänger (20) eine Umrechnungsstufe vorgesehen ist, die dem Umstand Rechnung trägt, daß die Laufrollen im allgemeinen unter einem geringfügigen Winkel von z.B.15° zur eigentlichen Laufrichtung abrollen.

17. Rollvorrichtung nach einem der vorhergehenden Ansprüche,
**dadurch gekennzeichnet,**
**daß** nach einer vorbestimmten Stillstandszeit von z.B. 5 bis 10 Minuten die Elektronik von Sender (18) bzw. Empfänger abgeschaltet wird und daß die erneute Einschaltung erfolgt, sobald die Meßrolle (15) sich erneut zu drehen beginnt.

18. Rollvorrichtung nach einem der vorhergehenden Ansprüche,
**dadurch gekennzeichnet,**
**daß** das Gehäuse aus Dämpfungsmaterial besteht bzw. von Dämpfungsmaterial umgeben ist.

19. Rollvorrichtung nach Anspruch 2 bis 18,
**dadurch gekennzeichnet,**
**daß** die Tragarme (22) lösbar am Grundkörper (11) befestigt bzw. befestigbar sind, und zwar bevorzugt durch Aufklipsen oder Aufstecken.

20. Rollvorrichtung nach einem der Ansprüche 2 bis 19,
**dadurch gekennzeichnet,**
**daß** die Tragarme (22) als längliches, flaches Gebilde ausgebildet sind, welches seitlich nur geringfügig vom Grundkörper (11) vorsteht.

## Claims

1. A skating apparatus having a base element (11) which supports a foot, a boot or a shoe (21) of a skater, on which a plurality of wheels (12) contacting the ground are provided and which has means (15, 20, 27, 28) for the measurement and display of at least one parameter dependent on the rotational movement, in particular on the rotational speed, of at least one wheel (12), in particular an inline skate having a base element (11) connected or connectable to a boot (21) and a plurality of wheels (12) arranged in series in a line, with means (26, 27) being provided to determine the rotational movement, in particular the rotational speed, of a wheel (15), and with a transmitter (18) being provided which transmits a signal representative for the rotational movement, in particular for the rotational speed or the rotational path, and with a receiver (20) for the signals transmitted by the transmitter (18) being provided at a distance from the housing (13), preferably at the hand, in particular at the hand protector (19) provided for the protection of the hand of the skater, said receiver being fitted with an computing circuit and converting the received signals into an optical and/or acoustic indication for the parameter(s) of the rotational movement, in particular the speed or the distance travelled,
**characterised in that**
a housing (13) is arranged on the base element (11) close to one of the wheels (12), preferably close to the last wheel (12) and resiliently pressed or pressable against the circumference of the respective wheel (12); **in that** a measuring wheel (15), having an axis of rotation (17) extending parallel to the wheel axle (16), projects slightly through an opening (14) in the housing (13) facing the wheel (12), is resiliently pressed or pressable against the circumference of the wheel (12) via the housing (13) and is rotatably arranged inside the housing (13), with the wheel whose rotational movement is determined by the means (26, 27) being the measuring wheel (15) and the means (26, 27) to determine the rotational movement of the measuring wheel (15) being provided in the housing (13).

2. A skating apparatus in accordance with claim 1, **characterised in that** one support arm (22), and preferably two support arms, is/are provided at the side in the region of the wheel axle (16) of the rearmost wheel (12), projects/project obliquely rearwardly and upwardly and extends/extend up to and beyond the outer circumference of the respective wheel (12); and **in that** the housing (13) with the measuring wheel (15) is attached to the end region of the support arms (22) remote from the wheel axle (16).

3. A skating apparatus in accordance with claim 2, **characterized in that** the housing (13) substantially extends obliquely downwardly and rearwardly behind the respective wheel (12) from the fastening position (23) at the support arms (22).

4. A skating apparatus in accordance with claim 2 or claim 3, **characterised in that** the housing (13) is pivotably attached about an axis 23 in the upper region of the support arms (22) and is pressed with the measuring wheel (15) against the circumference of the wheel (12) by a spring arrangement (24) supported at the support arms (22).

5. A skating apparatus in accordance with any one of the preceding claims, **characterised in that** the axis of rotation (17) of the measuring wheel (15) lies somewhat higher than the axle (16) of the wheel relative to the ground (25).

6. A skating apparatus in accordance with any one of the preceding claims, **characterised in that** the measuring wheel (15) has magnetic elements (26) on or close to its circumference which cooperate with a sensor (27) fixed to the housing which generates the pulse signals corresponding to the rotational speed of the measuring wheel (15).

7. A skating apparatus in accordance with any one of the preceding claims, **characterised in that** an electronic system (28) is arranged in the housing, is connected to the sensor (27) and is fed by a battery (29) accommodated in the housing.

8. A skating apparatus in accordance with claim 7, **characterised in that** the transmitter (18) is integrated into the electronic system (28).

9. A skating apparatus in accordance with any one of the preceding claims, **characterised in that** the receiver (20), which receives the rotational movement signals radiated by the transmitter (18), can be attached to the hand protector (19), and indeed preferably to the side contacting the back of the hand.

10. A skating apparatus in accordance with any one of the preceding claims, **characterised in that** a display (30) for the indication of the measured parameters is located on the upper side of the receiver (20).

11. A skating apparatus in accordance with any one of the preceding claims, **characterised in that** a mini-loudspeaker is located on the receiver (30) and provides the measured parameters acoustically.

12. A skating apparatus in accordance with any one of the preceding claims, **characterised in that** sensor buttons (31) can be provided on the hand protector (18), and indeed preferably at the side corresponding to the palm of the hand, by means of which the different functions of the receiver (20) can be triggered.

13. A skating apparatus in accordance with any one of the preceding claims, **characterised in that** the receiver (2) calculates one or more of the values time, speed, elapsed time, trip distance, total distance skated and the maximum speed.

14. A skating apparatus in accordance with any one of the preceding claims, **characterised in that** appropriate sensors can be attached to the body for the sensing of the heart/pulse rate of the skater; and **in that** the receiver (20) calculates the heart/pulse rate of the skater from the signals received from the sensor.

15. A skating apparatus in accordance with any one of the preceding claims, **characterised in that** mean values of the measured parameters are determined and ultimately displayed in the electronic system (28) or in the receiver (20) such that the irregularities of the rotational speeds of the wheels caused by the skating movements of the skater are averaged out.

16. A skating apparatus in accordance with any one of the preceding claims, **characterised in that** a conversion stage is provided in the electronic system (28) or in the receiver (20) which takes into account the circumstance that the wheels generally roll at a low angle of e.g. 15° with respect to the actual skating direction.

17. A skating apparatus in accordance with any one of the preceding claims, **characterised in that**, after a pre-determined standstill time of e.g. 5 to 10 minutes, the electronic system is switched off by the transmitter (18) or by the receiver; and **in that** the repeated switching-on takes place as soon as the measuring wheel (15) starts to rotate again.

18. A skating apparatus in accordance with any one of the preceding claims, **characterised in that** the housing consists of a damping material or is surrounded by damping material.

19. A skating apparatus in accordance with any one of the claims 2 to 18, **characterised in that** the support arms (22) are or can be releasably attached to the base element (11), and indeed preferably by being clipped on or pushed on.

20. A skating apparatus in accordance with any one of the claims 2 to 19, **characterised in that** the support arms (22) are made as an elongate, shallow structure which only slightly projects from the base element (11) at the side.

## Revendications

1. Dispositif de roulement comportant un corps de base (11), qui supporte un pied, une botte ou une chaussure (21) d'un utilisateur et sur lequel sont prévues plusieurs roulettes de roulement (12) appliquées au sol, et comportant des moyens (15, 20, 27, 28) pour mesurer et afficher au moins un paramètre dépendant du mouvement de rotation, en particulier de la vitesse de rotation d'au moins une roulette de roulement (12), en particulier patin à roulettes en ligne comprenant un corps de base (11) relié ou susceptible d'être relié à une botte (21) et plusieurs roulettes de roulement (12) agencées en ligne les unes derrière les autres, dans lequel sont prévus des moyens (26, 27) pour constater le mouvement de rotation, en particulier la vitesse de rotation d'une roulette (15), et un émetteur (18) qui émet un signal représentatif du mouvement de rotation, en particulier de la vitesse de rotation ou du trajet de rotation, et dans lequel est prévu, à distance du boîtier (13), de préférence sur la main, en particulier sur le protecteur de main (19) destiné à la protection de la main de l'utilisateur, un récepteur (20) muni d'un circuit de calcul pour les signaux émis par l'émetteur (18), récepteur qui convertit les signaux reçus en un affichage optique et/ou acoustique pour le ou les paramètre(s) du mouvement de rotation, en particulier pour la vitesse ou pour le trajet parcouru,
**caractérisé en ce que**
sur le corps de base (11), à proximité de l'une des roulettes de roulement (12), de préférence à proximité de la dernière roulette de roulement (12), un boîtier (13) est pressé ou susceptible d'être pressé élastiquement contre la périphérie de la roulette de roulement concernée (12), **en ce qu'**à l'intérieur du boîtier (13) est prévue avec faculté de rotation une roulette de mesure (15) qui fait légèrement saillie en direction de la roulette de roulement concernée (12) à travers une ouverture (14) ménagée dans le boîtier (13) et tournée vers la roulette de roulement (12), qui présente un axe de rotation (17) s'étendant parallèlement à l'axe (16) de la roulette de roulement et qui est pressée ou susceptible d'être pressée par le boîtier (13) élastiquement contre la périphérie de la roulette de roulement (12), et **en ce que** la roulette dont le mouvement de rotation est constaté par les moyens (26, 27) est la roulette de mesure (15), et les moyens (26, 27) pour constater le mouvement de rotation de la roulette de mesure (15) sont prévus dans le boîtier (13).

2. Dispositif de roulement selon la revendication 1, **caractérisé en ce que** dans la zone de l'axe (16) de la roulette de roulement la plus arrière (12), il est prévu latéralement un et de préférence deux bras porteurs (22) qui font saillie en oblique vers l'arrière et vers le haut et qui s'étendent jusque par-dessus la périphérie extérieure de la roulette de roulement concernée (12), et **en ce que** dans la zone d'extrémité des bras porteurs (22) détournée de l'axe (16) de la roulette de roulement, le boîtier (13) est fixé avec la roulette de mesure (15).

3. Dispositif de roulement selon la revendication 2, **caractérisé en ce que** le boîtier (13) s'étend à partir de l'emplacement de fixation (23) sur les bras porteurs (22) en oblique vers le bas et vers l'arrière sensiblement derrière la roulette de roulement concernée (12).

4. Dispositif de roulement selon l'une ou l'autre des revendications 2 et 3, **caractérisé en ce que** le boîtier (13) est fixé avec faculté de pivotement autour d'un axe (23) dans la zone d'extrémité supérieure des bras porteurs (22) et est pressé avec la roulette de mesure (15) contre la périphérie de la roulette de roulement (12) par un agencement à ressort (24) prenant appui contre les bras porteurs (22).

5. Dispositif de roulement selon l'une des revendications précédentes, **caractérisé en ce que** l'axe de rotation (17) de la roulette de mesure (15) est situé légèrement plus haut par rapport au sol (25) que l'axe (1611) de la roulette de roulement.

6. Dispositif de roulement selon l'une des revendications précédentes, **caractérisé en ce que** la roulette de mesure (15) comprend sur ou à proximité de sa périphérie des éléments magnétiques (26) qui coopèrent avec un détecteur (27) solidaire du boîtier, détecteur qui génère des signaux d'impulsion correspondant à la vitesse de rotation de la roulette de mesure (15).

7. Dispositif de roulement selon l'une des revendications précédentes, **caractérisé en ce que** dans le boîtier est agencée une unité électronique (28) qui est branchée au détecteur (27) et qui est alimentée par une batterie ou pile (29) logée dans le boîtier.

8. Dispositif de roulement selon la revendication 7, **caractérisé en ce qu'**un émetteur (18) est intégré dans l'unité électronique (28).

9. Dispositif de roulement selon l'une des revendications précédentes, **caractérisé en ce que** le récepteur (20) est susceptible d'être monté sur le protecteur de main (19), à savoir de préférence sur le côté appliqué contre le dos de la main, et reçoit les signaux du mouvement de rotation émis par l'émetteur (18).

10. Dispositif de roulement selon l'une des revendications précédentes, **caractérisé en ce qu'**un écran d'affichage (30) pour afficher les paramètres mesurés se trouve sur le côté supérieur du récepteur (20).

11. Dispositif de roulement selon l'une des revendications précédentes, **caractérisé en ce qu'**un mini haut-parleur se trouve sur le récepteur (30), qui distribue par voie acoustique les paramètres mesurés.

12. Dispositif de roulement selon l'une des revendications précédentes, **caractérisé en ce qu'**il est prévu sur le protecteur de main (18), à savoir de préférence sur le côté correspondant à la surface intérieure de la main, des touches de détecteur (31) au moyen desquelles peuvent être déclenchées les différentes fonctions du récepteur (20).

13. Dispositif de roulement selon l'une des revendications précédentes, **caractérisé en ce que** le récepteur (2) calcule une ou plusieurs parmi les grandeurs que sont l'heure, la vitesse, la durée, le trajet journalier, le trajet parcouru total et la vitesse maximale.

14. Dispositif de roulement selon l'une des revendications précédentes, **caractérisé en ce que** pour détecter la fréquence cardiaque/pouls de l'utilisateur, des détecteurs correspondants sont susceptibles d'être appliqués sur son corps, et **en ce que** le récepteur (20) calcule la fréquence cardiaque/pouls de l'utilisateur à partir des signaux reçus du détecteur.

15. Dispositif de roulement selon l'une des revendications précédentes, **caractérisé en ce que** des valeurs moyennées des paramètres mesurés sont déterminées dans l'unité électronique (28) ou dans le récepteur (20) et finalement affichées de telle sorte que les irrégularités, causées par les mouvements de course de l'utilisateur, des vitesses de rotation des roulettes de roulement sont filtrées.

16. Dispositif de roulement selon l'une des revendications précédentes, **caractérisé en ce que** dans l'unité électronique (28) ou dans le récepteur (20) est prévu un étage de conversion qui prend en compte que les roulettes de roulement roulent en général sous un léger angle de par exemple 15° par rapport à la direction de roulement proprement dite.

17. Dispositif de roulement selon l'une des revendications précédentes, **caractérisé en ce qu'**au bout d'une période d'arrêt prédéterminée de par exemple 5 à 10 minutes, l'unité électronique est coupée de l'émetteur (18) ou du récepteur, et **en ce que** la nouvelle mise en marche s'effectue dès que la roulette de mesure (15) commence de nouveau à tourner.

18. Dispositif de roulement selon l'une des revendications précédentes, **caractérisé en ce que** le boîtier est constitué de matériau amortisseur ou est entouré par du matériau amortisseur.

19. Dispositif de roulement selon l'une des revendications 2 à 18, **caractérisé en ce que** les bras porteurs (22) sont fixés ou susceptibles d'être fixés de façon détachable sur le corps de base (11), et ceci de préférence par clipsage ou par enfichage.

20. Dispositif de roulement selon l'une des revendications 2 à 19, **caractérisé en ce que** les bras porteurs (22) sont réalisés sous forme de structures allongées plates qui ne font saillie que légèrement latéralement du corps de base (11).
